# FASCICULE DE BREVET EUROPEEN

(11) **EP 0 932 264 B1**
(45) Date de publication et mention de la délivrance du brevet: **24.09.2003**
(21) Numéro de dépôt: 98440010.1
(22) Date de dépôt: 23.01.1998
(51) Int. Cl.: H04B 3/54

(54) **Emetteur apte à transmettre à un récepteur des données numériques par l'intermédiaire d'un signal en modulation en fréquence sur un réseau d'alimentation en courant alternatif**
Sender zum Übertragen von digitalen Daten an einen Empfänger mittels eines frequenzmodulierten Signals über ein Wechselstromversorgungsnetz
Transmitter suitable for the transmission of digital data to a receiver by means of a frequency modulated signal on an AC power supply line

(43) Date de publication de la demande: 28.07.1999
(73) Titulaire: BUBENDORFF VOLET ROULANT, 68300 Saint-Louis (FR); Micrel Société Anonyme, 56700 Hennebont (FR)
(72) Inventeur: Raude, Philippe, 56100 Lorient (FR)
(74) Mandataire: Rhein, Alain

(56) Documents cités:
- EP-A- 0 756 389
- US-A- 4 633 218
- US-A- 5 491 463

## Description

L'invention a trait, d'une part, à un émetteur apte à transmettre à un récepteur des données numériques par l'intermédiaire d'un signal en modulation de fréquence sur un réseau d'alimentation en courant alternatif, et, d'autre part, à un récepteur apte à décrypter en numérique un tel signal transmis en modulation de fréquence, sachant que l'invention a trait, encore, à un dispositif de transmission de commande à courant porteur.

Finalement, l'invention concerne un protocole pour la transmission et la réception par courant porteur de données numériques par l'intermédiaire d'un signal en modulation de fréquence sur un réseau d'alimentation à courant alternatif polyphasé.

Les solutions adoptées jusqu'à présent pour la transmission de données par courant porteur font appel, la plupart du temps, à un modem venant équiper l'émetteur et le récepteur et fonctionnant à des débits élevés, souvent supérieurs à 2000. De tels modems sont capables de traiter un nombre important d'informations en un temps très réduit sachant, entre autres, qu'il est nécessaire de faire appel en association à des calculateurs spéciaux capables de travailler à des vitesses de résolution élevées, sans compter que cela nécessite l'utilisation, en parallèle, de filtres performants pour atténuer l'effet du bruit résultant de ces vitesses de communication.

Ces solutions posent, en outre, un problème d'amplification du signal tant à l'émission qu'à la réception. En effet, la tension d'alimentation d'un modem est généralement limitée aux environs de 10 volts de sorte que le signal émis sur le réseau en sortie du transformateur d'adaptation (ayant pour but de limiter sa tension par exemple de l'ordre de 1 volt, conformément aux réglementations applicables) est d'intensité réduite.

Une autre technologie consiste à faire appel aux performances du microprocesseur par l'intermédiaire duquel l'on vient fabriquer, en passant par un filtre passe-bas, les fréquences correspondant aux données binaires 0 et 1.

Plus particulièrement, par l'intermédiaire de ce microprocesseur, cadencé par un quartz approprié, l'on vient créer un signal carré de la fréquence choisie, ce signal étant, ensuite, transformé en un signal plus ou moins sinusoïdal par l'intermédiaire du filtre passe-bas. Une telle manière de procéder conduit à faire travailler à vitesse élevée, le microprocesseur de sorte que les performances de ce dernier doivent être à la hauteur. De plus, les filtres passe-bas aptes à délivrer un signal sinusoïdal à partir d'un signal carré s'avèrent particulièrement coûteux de sorte que le coût de revient d'un émetteur et/ou d'un récepteur conçu selon une telle technologie est relativement élevé et limite leurs applications.

Finalement, dans la plupart des cas de figures connus, l'émetteur vient transmettre son signal à n'importe quel moment suivant l'ordre de transmission, de sorte que le récepteur doit être à même d'identifier le début du message transmis. Aussi, pour obtenir cette synchronisation entre récepteur et émetteur, celui-ci est amené à transmettre une information supplémentaire, tel un code de synchronisation, qui, s'il est identifié par le récepteur rendra celui-ci attentif sur le message qui fait suite au code de synchronisation. Par conséquence, cela amène une nouvelle fois, le microprocesseur à faire preuve de performance.

On notera qu'il est par ailleurs connu, par le document US-4 633 218 un appareil pour la réception de signaux digitaux de faible niveau transmis par courant porteur.

L'appareil dont il est question comporte un détecteur à même de convertir les signaux en modulation de fréquence en des signaux numériques, lesquels sont appliqués au microprocesseur. Celui-ci, en retour, émet des signaux de contrôle en correspondance avec les informations reçues au travers du réseau.

En somme, le récepteur, tel que décrit dans ce document antérieur, vient tout d'abord filtrer un signal avant de l'amplifier et d'assurer sa démodulation. Ce n'est que ce signal démodulé, sous forme de données de type numérique, qui vient attaquer le microcontrôleur.

On connaît, par ailleurs, par le document US-5 491 463 un système de communication par courant porteur. Ce système comporte un émetteur prévu apte à générer et à transmettre un signal par le réseau d'alimentation en courant électrique. Il comporte encore un récepteur prévu apte à détecter le signal transmis. Ce système intègre, tout particulièrement, un protocole d'adressage spécifique.

On connaît également, par le document EP-0 756 389, un circuit d'affectation d'un canal à une transmission entre au moins deux modems utilisant le réseau électrique comme support de transmission d'un flux de données binaires. Ce circuit comporte, côté réception, un dispositif de sélection d'un canal choisi pour son meilleur niveau de transmission en fonction de l'énergie reçue sur plusieurs canaux de transmission. Côté émission, il comporte un dispositif destiné à moduler un signal à émettre sur au moins une fréquence choisie parmi plusieurs fréquences élevées définissant des canaux de transmission. Tout particulièrement, le signal à émettre est un flux de données binaires converties en un signal modulé sous la forme d'échantillons de portions de deux fréquences centrées sur une fréquence centrale initiale par un modulateur par saut de fréquence. La modulation effectuée par ledit dispositif de modulation consiste en un décalage de ladite fréquence centrale initiale vers au moins une fréquence plus élevée en respectant l'écart entre les deux fréquences de la modulation.

En fait, une première démarche inventive de la présente invention a consisté à mettre en évidence que si la transmission de données par courant-porteur peut être particulièrement utile en matière de domotique, il est très fréquent que la gestion du fonctionnement de nombreux appareillages électriques s'obtient par la transmission d'ordre simple du type marche-arrêt. Tout au plus, il peut être exigé le contrôle de certains paramètres tels que la température dans le domaine du chauffage, ou encore la vérification de la bonne exécution d'un ordre transmis, par exemple dans le cadre de la gestion automatisée du fonctionnement des volets roulants.

De plus, le temps de réponse de tels appareillages électriques entrant dans la gestion domotique d'une habitation, ne présente, souvent, aucune importance. Ainsi, dans ce domaine de la domotique une gestion de transmission de données numériques à des vitesses de l'ordre de la milliseconde n'a pas d'intérêt et ne constitue pas un facteur de confort pour l'usager.

Une seconde démarche inventive a consisté, partant du constat précédent, à développer une technologie de transmission et de réception par courant porteur qui soit, à la fois, fiable et peu coûteuse et, donc, faisant appel à des composants bon marché, sans pour autant que cela ne soit au détriment de la sensibilité du dispositif.

En fait, comme cela ressortira de la description qui va suivre, la présente invention a su répondre à ce problème précisément, en réduisant, sensiblement, le débit des données transmises et en rationalisant le nombre des informations contenues dans ces données, ceci en corrélation avec le type d'appareil électrique destiné à être géré par courant porteur.

Tout particulièrement, l'invention concerne un émetteur apte à transmettre à un récepteur des données numériques sous forme d'un signal en modulation de fréquence sur un réseau d'alimentation en courant alternatif caractérisé en ce qu'il comporte, en combinaison
- un oscillateur LC connecté au réseau en passant par un filtre passe-bande émission calé sur les fréquences d'émission, un amplificateur à ampli opérationnel et un transformateur d'adaptation ;
- un circuit de commande de fréquence constitué d'une série de condensateurs aptes à être sélectionnés par un microprocesseur pour, d'une part, assurer la sélection des fréquences d'émission correspondant au codage des bits 1 ou 0 des données numériques à transmettre et, d'autre part, ajuster ces fréquences d'émission ;
- un circuit de réception notamment apte à détecter la présence d'un signal sur le réseau avant chaque émission.

Selon une autre particularité de cet émetteur, celui-ci comporte un circuit de synchronisation du signal d'émission par rapport au signal ou à l'un au moins des signaux du réseau d'alimentation en courant alternatif.

Les avantages découlant de la présente invention consistent, tout d'abord, en ce que l'absence de modem et la faible consommation en énergie des composants de l'émetteur permettent l'alimentation de ce dernier au travers d'un simple condensateur d'alimentation en substitution du transformateur nécessaire jusqu'à présent. Cela permet, en outre, d'envisager l'alimentation de l'amplificateur de puissance à une tension telle que l'amplification du signal, intervenant en amont du transformateur d'adaptation, se fasse uniquement en courant ce qui présente l'avantage d'un gain en courant énorme sans distorsion du signal.

Avantageusement, l'émetteur fonctionne à un débit de 100 bauds, soit 1 bit tous les 10 millisecondes dans le cadre d'un réseau d'alimentation en courant alternatif à 50 Hz.

Finalement, en travaillant à des débits faibles, dans une bande passante étroite et en amplifiant, au maximum en intensité, le signal, il en résulte une particulière sensibilité d'un dispositif de transmission et de réception par courant porteur intégrant un tel émetteur conforme à l'invention.

A ce propos, l'invention concerne, encore, un récepteur apte à décrypter, en numérique, un signal transmis en modulation de fréquence sur un réseau d'alimentation en courant alternatif,
- un filtre amplificateur passe-bande de réception calé sur les fréquences et apte à atténuer les fréquences parasites, notamment du réseau d'alimentation et à amplifier les fréquences dudit signal ;
caractérisé en ce qu'il comporte un comparateur intégré à un microprocesseur et relié à un compteur piloté par un timer au travers d'un oscillateur à quartz pour la transformation du signal reçu en modulation de fréquence en des données numériques.

Là encore, l'absence de modem permet l'alimentation dudit récepteur au travers d'une simple résistance chutrice.

Préférentiellement, le timer à quartz est synchronisé sur le signal ou l'un au moins des signaux du réseau d'alimentation en courant alternatif ce qui a pour but de faciliter la reconnaissance du début d'un signal transmis par un émetteur dès l'instant que ce dernier est, lui aussi, synchronisé sur ce réseau dans le cadre de son émission.

Finalement, tel que cela ressortira dans la description suivante, l'invention concerne, encore, un protocole pour la transmission et la réception par courant porteur de données numériques par l'intermédiaire d'un signal en modulation de fréquence sur un réseau d'alimentation à courant alternatif polyphasé.

La présente invention sera mieux comprise à la lecture de la description qui va suivre se rapportant aux dessins joints en annexe dans lesquels :
- la figure 1 est un schéma synoptique du circuit de l'émetteur tandis que la figure 2 est la représentation du schéma synoptique du récepteur conforme à l' invention ;
- les figures 3 et 4 correspondent à une représentation schématisée du protocole mis en application pour la transmission et la réception par courant porteur de données numériques par l'intermédiaire d'un signal en modulation de fréquence sur un réseau d'alimentation à courant alternatif triphasé.

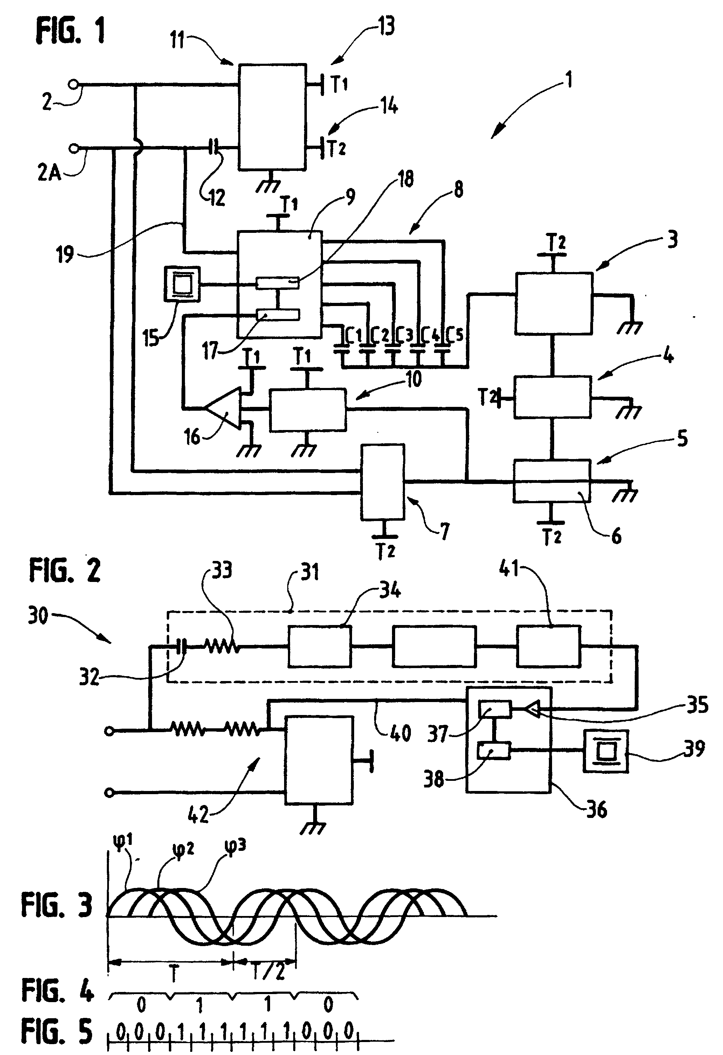

L'invention concerne, tout d'abord, un émetteur 1 dont un schéma synoptique a été représenté dans la figure 1 et qui est prévu apte à transmettre à un récepteur approprié des données numériques par l'intermédiaire d'un signal en modulation de fréquence sur un réseau d'alimentation en courant alternatif 2.

Tel que visible sur cette figure 1, cet émetteur 1 se distingue en ce qu'il comporte un oscillateur LC 3 connecté au réseau 2 en passant par un filtre passe-bande d'émission 4, calé sur les fréquences d'émission f1, f2, un amplificateur 5 à amplificateur opérationnel 6 et un transformateur d'adaptation 7 pour le respect des réglementations applicables en matière de tension d'un signal émis sur un réseau 2. Ainsi, certaines normes applicables dans le domaine fixent cette tension maxi d'émission d'un signal à 1 volt.

L'émetteur 1 comporte, encore, un circuit de commande de fréquence constitué d'une série de condensateurs C1, C2, C3, C4, C5 aptes à être sélectionnés par un microprocesseur 9 pour, d'une part, assurer la sélection des fréquences f1, f2 correspondant au codage des bits 1 ou 0 des données numériques à transmettre et, d'autre part, ajuster ces fréquences d'émission f1, f2 . Cet émetteur 1 reçoit également un circuit de réception 10 notamment apte à détecter, comme il se doit, la présence d'un signal sur le réseau 2 avant chaque émission.

Comme le montre le schéma synoptique de la figure 1, cet émetteur comporte, en outre, un circuit d'alimentation 11 qui consiste, principalement en un condensateur d'alimentation 12 apte à fournir un courant d'alimentation suffisant en raison de la faible consommation de l'ensemble des composants de l'émetteur 1, liée à l'absence de modem.

La solution, conforme à l'invention, permet, en outre, d'obtenir en sortie du circuit d'alimentation 11 des alimentations 13, 14 à des tensions T1, T2 différentes, dont l'une 13 est plus particulièrement adaptée pour l'alimentation de composants électroniques tels que le microprocesseur 9, tandis que l'autre 14 peut être spécialement destinée à l'alimentation de l'amplificateur 5 ou encore de l'oscillateur LC 3. Cela permet, tout particulièrement au niveau de l'amplificateur 5, d'assurer une amplification du signal à tension constante en vue d'un gain en intensité élevé. La finalité étant une sensibilité accrue au niveau du signal transmis sur le réseau 2.

Pour en revenir au circuit de commande de fréquence, l'on observera que l'oscillateur LC 3 délivre, au travers de sa self inductance L et de sa capacité C, un signal d'une fréquence f1 correspondant à l'un des bits 0 ou 1 des données numériques à transmettre sachant, précisément, que cette fréquence f1 peut être corrigée par un certain nombre de condensateurs C1, C2, C3, C4 prévus aptes à être connectés en parallèle. A ce propos, cet ajustement de la fréquence f1 délivrée par l'oscillateur LC s'opère par l'intermédiaire du microprocesseur 9 par ailleurs cadencé par un oscillateur à quartz 15 approprié.

Ainsi, après analyse de la fréquence d'émission f1 en sortie de l'oscillateur LC par rapport à une fréquence de référence en mémoire, le microprocesseur 9 est à même d'ajouter ou de soustraire l'un quelconque de ces condensateurs de correction C1, C2, C3, C4 et venir corriger cette fréquence 1.

Ce microprocesseur 9 peut encore sélectionner un autre condensateur C5 apte à assurer le saut entre ladite fréquence f1 et une autre fréquence f2 correspondant au code de l'autre bit des données numériques respectivement 1 ou 0 ceci en fonction des données numériques à transmettre. A nouveau cette fréquence d'émission f2 peut être corrigée selon le principe qui vient d'être décrit.

En fait, l'objectif vise à corriger, plus particulièrement, les imprécisions d'un oscillateur LC 3 initialement peu performant donc d'un coût de revient moindre.

On observera que c'est au travers du circuit de réception 10 que le signal d'émission arrive au niveau du microprocesseur 9, ceci en passant au travers d'un comparateur 16 apte à transformer un signal sinusoïdal en un signal du type tout ou rien à la base duquel ce microprocesseur est en mesure de procéder à un comptage au moyen d'un compteur 17 intégré. A ce dernier est associé, dans ce but, un timer 18 par ailleurs géré au travers de l'oscillateur à quartz 15.

Ainsi, à des intervalles de temps déterminés, fonction du débit d'émission, le compteur 17 est analysé et systématiquement remis à zéro afin d'en déduire la fréquence du signal d'émission. En cas de détection, de la part de ce microprocesseur 9, d'un décalage de cette fréquence d'émission par rapport à une fréquence de référence f1 ou f2 en mémoire et correspondant au bit 0 ou 1 qui doit être transmis, ledit microprocesseur 9 vient ajuster cette fréquence d'émission en intervenant sur le ou les condensateurs C1 à C4 raccordés à l'oscillateur LC 3.

Il convient de rappeler, à nouveau, que le condensateur C5 est sélectionné dès l'instant qu'il convient de passer de la fréquence de signal f1 correspondant au code d'un bit 0 par exemple à la fréquence f2 ou vice versa, code d'un bit 1 ou vice versa.

Au vu de la description qui précède, l'on comprend que le comptage intervenant au niveau du microprocesseur 9 doit être synchronisé avec le signal d'émission ce qui peut se faire par la reconnaissance d'un mot de code ou conformément à l'invention par la synchronisation du timer 18 donc du compteur 17 et du signal d'émission par rapport à une référence. En fait, il a été choisi comme référence le passage à zéro du signal du réseau d'alimentation en courant alternatif 2 ou de l'un au moins des signaux de ce réseau, par exemple *dans* le cadre d'une configuration triphasée.

Dans ce but, le microprocesseur 9 est raccordé, précisément, à l'une au moins des phases 2A de ce réseau 2 par une liaison 19.

On observera que l'écoute de la présence d'un signal sur le réseau avant chaque émission peut être similaire au processus employé pour ajuster le signal d'émission. Plus particulièrement, au travers du circuit de réception 10 et donc du comparateur 16, tout signal sinusoïdal reçu est transformé en un signal du type tout ou rien permettant d'en déterminer la fréquence au travers du compteur 17 du microprocesseur 9.

Selon un mode de réalisation préférentiel, il est choisi un débit d'émission de sorte qu'un bit correspond à une demi-alternance du signal du réseau d'alimentation en courant alternatif, tout particulièrement dans une de ses phases 2A. Ceci correspond à 10 millisecondes pour un signal de type 50 Hz, soit un débit de 100 bauds.

Par ailleurs, le timer 18 du microprocesseur 9 est programmé de sorte qu'il soit procédé à plusieurs comptages par l'intermédiaire du compteur 17, durant cette période. Ainsi, l'on peut par exemple, procéder à un comptage tous les 3,3 millisecondes, soit tous les 1/6 d'alternance. En quelque sorte, tous les 3,3 millisecondes le compteur 17 est remis à zéro tout comme le timer 18 pour une nouvelle période de comptage de 3,3 millisecondes.

Comme rappelé ci-dessus, ce comptage s'effectue de manière synchrone au passage à zéro du signal dans la phase 2A du réseau 2. Quant au microprocesseur 9, il déduit, sur chacune de ces périodes de comptage, une fréquence qui, en phase d'écoute, lui permet de déterminer si un signal est émis sur le réseau 2 et si l'émetteur 1 est en droit d'émettre. Durant l'émission la fréquence calculée par ce microprocesseur a pour but de lui permettre le réajustement de la fréquence d'émission f1 ou f2 correspondant aux codes de fréquence des bits 0 et 1.

L'invention concerne, encore, un récepteur 30 apte à décrypter en numérique un signal transmis en modulation de fréquence sur un réseau d'alimentation en courant alternatif 2. Ce récepteur 30 comporte un filtre amplificateur passe-bande de réception 31 calé sur les fréquences f1, f2 du signal d'émission et prévu apte à atténuer les fréquences parasites, notamment celle du signal du réseau 2 et à amplifier les fréquences f1, f2 dudit signal d'émission. Un tel filtre amplificateur 31 a également pour objectif de supporter des surtensions, telles que la foudre ou autre. En fait, cela est obtenu au travers d'un montage en série, par exemple, d'un condensateur 32 et d'une résistance 33, celle-ci permettant, tout particulièrement, de limiter le courant.

Selon l'invention, ce filtre amplificateur 31 est constitué d'au moins un premier filtre passif R série L, C parallèles 34 suivi d'un ou plusieurs étages de filtres actifs utilisant par exemple un inverseur de type CMOS en régime linéaire.

Le filtre amplificateur 31 est connecté à l'entrée d'un comparateur 35 d'un microprocesseur 36, lequel comparateur 35 ayant, là encore, la fonction de transformer un signal sinusoïdal en un signal du type tout ou rien à la base duquel il est possible de procéder à un comptage.

A ce propos, le microprocesseur 36 comporte, encore, un compteur 37 géré par un timer 38 sachant que le microprocesseur 36 est lui-même cadencé au travers d'un oscillateur à quartz 39.

Ainsi, à réception d'un signal d'émission, il est déterminé, périodiquement, par l'intermédiaire du compteur 37 géré par le timer 38, la fréquence de ce signal d'émission. Cela permet au microprocesseur 36 d'en déduire les bits successivement émis et en définitive le message codé transmis en modulation de fréquence.

A noter, que le comptage auquel il est procédé par l'intermédiaire du microprocesseur 36 doit être nécessairement synchronisé sur le début du signal émis ce qui pourrait se faire par l'émission en phase initiale d'un signal de synchronisation. En fait, préférentiellement, le signal d'émission est synchronisé au passage à zéro du signal correspondant à l'une au moins des phases 2A du réseau 2 d'alimentation en courant alternatif sachant, par ailleurs, que le timer 38 du microprocesseur 36 est lui-même synchronisé sur le passage à zéro d'un au moins des signaux du réseau 2 par l'intermédiaire d'une connexion de synchronisation 40 appropriée.

Connaissant, de ce fait, le moment à partir duquel il convient de procéder au comptage, celui-ci sera effectué sur une durée, contrôlée par le timer 38, de manière ajustée au débit du signal d'émission. En fait, cette durée et donc la périodicité de ce comptage est choisie, au plus, égale à la durée d'émission d'un bit. Préférentiellement, cette durée de comptage correspond à une fraction de ce temps d'émission d'un bit. Ainsi, dans le cadre du protocole de la détermination du message numérique transmis, l'analyse d'un bit peut se faire, non pas sur une seule mesure, mais sur plusieurs mesures. Par exemple, si, pendant la durée de l'émission d'un bit, il est procédé à deux, trois ou plus de comptages, il est possible de faire la moyenne des valeurs relevées par le compteur 37 en vue de déterminer s'il s'agit d'une fréquence d'émission f1 ou f2, soit à un bit 0 ou à un bit 1. Cela permet d'éviter les erreurs de transcription et de décodage d'un message numérique transmis par un signal en modulation de fréquence.

A ce propos, le filtre amplificateur 31 est encore complété par un second filtre passif L et C parallèle 41 à forte impédance sous l'influence d'un signal correspondant aux fréquences f1 et f2 et à faible impédance en cas de courant continu. Cela permet la détection d'un signal d'une tension très faible, ce qui là encore, conduit à une augmentation de la sensibilité du récepteur 30.

Le récepteur comporte encore un circuit d'alimentation 42 au travers du réseau d'alimentation en courant alternatif 2 constitué, principalement par une impédance chutrice, résistance ou condensateur relié à l'une des phases 2A de ce réseau.

Finalement, un dispositif de transmission de commande par courant porteur regroupant, à la fois, un émetteur 1 et un récepteur 30, tel que décrit plus haut, s'avère particulièrement performant tout en étant peu coûteux. Aussi, il est parfaitement adapté à la gestion domotique d'appareillage électrique dont la commande de fonctionnement peut se faire au travers d'un minimum d'informations.

A ce propos, l'on remarquera, tout particulièrement, que certains de ces appareillages électriques aptes à être commandés par un tel dispositif de transmission peuvent être amenés à être équipés, à la fois, d'un émetteur et d'un récepteur permettant d'instaurer une communication entre plusieurs de ces appareillages.

Dans un tel cas, cet émetteur et ce récepteur se partagerons les composants qui sont similaires pour l'un et l' autre dans la mesure où, précisément, une émission et une réception ne peuvent intervenir simultanément. Ainsi, un seul microprocesseur par ailleurs équipé d'un comparateur, d'un compteur et d'un timer géré par un oscillateur à quartz, est nécessaire. De même une seule alimentation suffit et ils se partageront le même circuit de réception, sachant, toutefois, que ce circuit de réception pourra alors être équipé d'un dispositif de réduction de gain dans la mesure où, en période d'écoute précédant une émission, il ne doit être détecté que des signaux d'une certaine puissance, par ailleurs, largement supérieure aux signaux auxquels doit être sensible le récepteur en phase de transmission de données par un autre émetteur. Ainsi, à titre d'exemple, si certaines normes demandent de détecter un signal d'au moins 10 mV avant d'émettre le récepteur doit être sensible, préférentiellement, à des signaux dont la tension peut être inférieure à 1 mV.

L'on observera, en outre, qu'en mettant en pratique, au niveau du récepteur 30, le protocole d'écoute d'un signal d'émission tel qu'exposé plus haut, il est possible de répondre au problème difficile de la communication entre un émetteur et un récepteur qui, sur un réseau d'alimentation à courant alternatif polyphasé, ne sont pas reliés à la même phase de ce réseau. A noter qu'il est nécessaire, toutefois, que ces différentes phases du réseau soient par ailleurs reliées entre elles, par exemple par des condensateurs à impédance très faible.

Tout particulièrement, tel qu'exposé ci-dessus, l'écoute sur le réseau par le récepteur 30 s'effectue sous forme de comptage périodique sur des durées correspondant à des fractions de la durée d'émission d'un bit.

Ainsi, en choisissant une durée d'émission de 1 bit égale à la durée d'une demi-alternance du signal périodique d'une des phases du réseau d'alimentation en courant alternatif, sur un tel réseau à n phases, la périodicité du comptage effectué par le microprocesseur 36 du récepteur 30 est choisie, avantageusement, égale à la durée d'une demi-alternance divisée par n.

Ainsi, si, préalablement à l'émission d'un message codé, celui-ci est précédé par l'émission d'un code de reconnaissance de phase, il est possible, au récepteur 30, au vu des résultats obtenus par le compteur pendant la période d'émission dudit code de reconnaissance, la phase sur laquelle se trouve l'émetteur par rapport à ce récepteur 30 de sorte qu'il est alors possible à ce dernier, connaissant le décalage entre phases, de se synchroniser par rapport audit émetteur 1 avant la lecture du message codé transmis.

Les figures 3 et suivantes illustrent schématiquement ce qui a été exposé ci-dessus.

Ainsi, si l'on prend le cas d'un réseau d'alimentation à courant alternatif du type triphasé, il a été représenté dans la figure 3, l'évolution, dans le temps, du signal sinusoïdal dans chacune des phases ϕ1, ϕ2, ϕ3, celles-ci étant, dans ces conditions, décalées de 1/6 d'une alternance T. A. supposer qu'il s'agisse d'un réseau d'alimentation en courant alternatif à 50 hertz et que le débit d'émission retenu est de 100 bauds, la durée d'émission d'un bit est de 10 millisecondes soit T/2.

Quant à la périodicité du comptage effectué par le microprocesseur 36 elle est égale à 3,3 millisecondes, soit T/2 x 1/3, trois étant le nombre de phases ϕ1, ϕ2, ϕ3.

A supposer, à présent que l'émetteur émet, avant chaque message codé, un code de reconnaissance de phase du type 0, 1,1, 0 le récepteur 30 de son côté, viendra lire, après comptage :
- s'il est sur la même phase ϕ1, 000111111000 ;
- si l'émission a lieu sur la phase ϕ1 et que le récepteur est sur la phase ϕ2, ce dernier lira le message suivant 00111111000 d'où il lui est facile de déduire son déphasage de 3,3 millisecondes par rapport à l'émetteur ;
- de même si l'émission a lieu sur la phase ϕ1 et l'écoute donc la réception sur la phase ϕ3 le message vu par le récepteur débute de la manière suivante 0111111000 ce qui, là encore, lui permet d'en déduire son décalage.

Finalement, tel que cela ressort de la description qui précède, la présente invention permet de répondre, de manière avantageuse, au problème de la transmission de données par courant porteur appliqué, plus particulièrement, à la gestion domotique d'appareillages électriques. En effet, un émetteur ou encore un récepteur de la technologique exposée ci-dessus s'avère, non seulement d'un coût de revient très faible, mais en outre particulièrement performant en ce qui concerne leur sensibilité. Ainsi, l'émission à débit réduit permet l'usage de microprocesseurs faiblement cadencés donc à consommation d'énergie réduite autorisant une alimentation simplifiée. De plus, ce faible débit d'émission conduit à une réduction du bruit au niveau du signal de réception lequel est donc plus facile à filtrer et à amplifier.

Pour en revenir aux différentes applications possibles de la présente invention, on observera que celle-ci est particulièrement adaptée à la gestion du fonctionnement d'appareils de chauffage ou encore de systèmes de fermeture tels que des portes, fenêtres, volets roulants ou analogues. En fait, elle trouvera également son utilité dans le cadre de la protection électronique d'accès. Ainsi, à titre d'exemple, une fenêtre peut être équipée d'un détecteur d'effraction quelconque qui, au travers d'un dispositif de transmission, conforme à l'invention, plus particulièrement un émetteur, peut être en liaison avec une centrale d'alarme appropriée. Si cette fenêtre est équipée, à la fois, d'un émetteur et d'un récepteur, il peut, en outre, y avoir contrôle de l'état de fonctionnement du capteur donc de l'état « ouvert ou fermé » de la fenêtre par ladite centrale. Celle-ci est alors en mesure d'en tenir informé l'usager.

Comme on peut le voir, la présente invention présente d'innombrables possibilités et vient répondre de manière avantageuse au problème posé.

## Revendications

1. Emetteur (1) apte à transmettre à un récepteur des données numériques sous forme d'un signal en modulation de fréquence sur un réseau d'alimentation en courant alternatif (2), **caractérisé en ce qu'**il comporte, en combinaison :
- un oscillateur LC (3) connecté au réseau (2) en passant par un filtre passe-bande émission calé sur les fréquences f1, f2 d'émission, un amplificateur (5) à ampli opérationnel (6) et un transformateur d'adaptation (7) ;
- un circuit de commande de fréquence (8) constitué d'une série de condensateurs (C1, C2, C3, C4, C5) aptes à être sélectionnés par un microprocesseur (9) pour, d'une part, assurer la sélection des fréquences d'émission f1, f2 correspondant au codage des bits 0 ou 1 des données numériques à transmettre et, d'autre part, ajuster ces fréquences d'émission f1, f2 ;
- un circuit de réception (10) notamment apte à détecter la présence d'un signal sur le réseau (2) avant chaque émission.

2. Emetteur selon la revendication 1, **caractérisé par le fait qu'**il comporte un circuit d'alimentation (11) constitué, principalement, par un condensateur d'alimentation (12) apte à créer un isolement diélectrique, ce circuit d'alimentation (11) étant encore conçu apte à assurer des alimentations (13, 14) à des tensions (T1, T2) différentes dont l'une (13) est plus particulièrement adaptée pour l'alimentation de composants électroniques, tel que le microprocesseur (9) tandis que l'autre (14) peut être spécialement destinée à l'alimentation de l'amplificateur (5) ou encore de l'oscillateur LC (3).

3. Emetteur selon la revendication 2, **caractérisé par le fait que** l'alimentation (14) est tout particulièrement définie pour permettre l'alimentation de l'amplificateur (5) à une tension déterminée en vue d'assurer une amplification du signal d'émission à tension constante.

4. Emetteur selon l'une quelconque des revendications précédentes, **caractérisé par le fait que** le signal d'émission est acheminé au travers du circuit de réception (10) vers le microprocesseur (9), en passant par un comparateur (16) apte à transformer un signal sinusoïdal en un signal du type tout ou rien, ledit comparateur (16) étant relié à un compteur (17) intégré audit microprocesseur (9) et associé à un timer (18), par ailleurs géré au travers d'un oscillateur à quartz (15), ceci pour l'analyse des fréquences f1, f2 de ce signal d'émission et leur correction au travers de la sélection des condensateurs (C1, C2, C3, C4) par rapport à au moins une fréquence de référence f1 ou f2 en mémoire correspondant au codage d'un bit 0 ou 1.

5. Emetteur selon l'une quelconque des revendications précédentes, **caractérisé par le fait que** le microprocesseur 9 est apte à sélectionner un condensateur (C5) à même d'assurer le saut entre une fréquence d'émission f1 correspondant au code d'un bit 0 ou 1 et une autre fréquence d'émission f2 correspondant au code de l'autre bit 1 ou 0 des données numériques à transmettre.

6. Emetteur selon l'une quelconque des revendications précédentes, **caractérisé par le fait qu'**il comporte des moyens de synchronisation (19) du signal d'émission par rapport au passage à zéro de l'un au moins des signaux sinusoïdaux du réseau d'alimentation en courant alternatif (2), ces moyens constituant, en outre, des moyens de synchronisation du timer (18) associé au compteur (17) du microprocesseur (9) à ce même passage à zéro dudit signal sur le réseau (2).

7. Emetteur selon l'une quelconque des revendications 4 à 6, **caractérisé par le fait que** le débit d'émission est choisi de sorte qu'un bit est émis, en modulation de fréquence, sur une durée correspondant, à une demi-alternance d'au moins l'un des signaux sinusoïdaux du réseau d'alimentation en courant alternatif (2), tandis qu'il est effectué un comptage par le compteur (17) du microprocesseur selon une périodicité au plus égale à cette demi-alternance dudit signal sinusoïdal du réseau d'alimentation en courant alternatif (2).

8. Récepteur apte à décrypter, en numérique, un signal transmis en modulation de fréquence sur un réseau d'alimentation en courant alternatif, comportant un filtre amplificateur passe-bande de réception (31) calé sur les fréquences f1, f2 du signal transmis et apte à atténuer les fréquences parasites, notamment du réseau d'alimentation à courant alternatif et à amplifier lesdites fréquences f1, et f2 du signal transmis, **caractérisé en ce qu'**il comporte encore un comparateur (35) intégré à un microprocesseur (36) et relié à un compteur (37) piloté par un timer (38) géré au travers d'un oscillateur à quartz (39) pour la transformation du signal reçu en modulation de fréquence en des données numériques.

9. Récepteur selon la revendication 8, **caractérisé par le fait que** le filtre amplificateur (31) est prévu apte à supporter des surtensions, plus particulièrement au travers d'un montage en série d'un condensateur (32) et d'une résistance (33), cette dernière ayant pour but de limiter le courant, ce filtre amplificateur (31) étant par ailleurs constitué d'au moins un premier filtre passif R , série L et C parallèles (35), suivi d'un ou plusieurs étages de filtres actifs notamment à inverseur du type CMOS en régime linéaire.

10. Récepteur selon la revendication 9, **caractérisé par le fait que** le filtre amplificateur (31) est encore complété par un second filtre passif L et C parallèles (41) à forte impédance sous l'influence d'un signal de fréquence f1 et f2 et à faible impédance en continu en vue de la détection d'un signal de faible tension.

11. Récepteur selon l'une quelconque des revendications 8 à 10, **caractérisé par le fait qu'**il comporte des moyens de synchronisation (40) du timer (38) du microprocesseur (36) assurant la gestion du compteur (37), ceci par rapport au passage à zéro d'au moins l'un des signaux sinusoïdaux du réseau d'alimentation en courant alternatif (2) en vue de la réception et du décodage d'un signal transmis par un émetteur également de manière synchrone par rapport au passage à zéro de l'un au moins de ces signaux sinusoïdaux dudit réseau (2).

12. Récepteur selon l'une quelconque des revendications 8 à 11, **caractérisé par le fait qu'**il comporte un circuit d'alimentation (42) raccordé au réseau (2) et constitué, principalement, par une impédance chutrice, résistance ou condensateur.

13. Dispositif de transmission de commande par courant porteur comportant un émetteur (1) selon l'une quelconque des revendications 1 à 8 et un récepteur (30) selon l'une quelconque des revendications 8 à 12.

14. Application d'un dispositif de transmission de commande par courant porteur selon la revendication 13 à la gestion domotique d'appareillages électriques, tel que des appareils de chauffage, des systèmes de fermeture, par exemple, des volets roulants, ou encore des systèmes de protection électroniques d'accès.

15. Protocole pour la transmission et la réception par courant porteur de données numériques par l'intermédiaire d'un signal en modulation de fréquence sur un réseau d'alimentation en courant alternatif polyphasé, **caractérisé par le fait que** :
- la durée d'émission de 1 bit en modulation de fréquence est égale à la durée d'une demi-alternance du signal périodique sinusoïdal d'une des phases dudit réseau d'alimentation en courant alternatif, ledit signal d'émission étant, en outre, synchronisé au passage à zéro du signal périodique de l'une desdites phases ;
- à la réception du signal en modulation de fréquence, celui-ci est transformé en un signal du type tout ou rien au travers d'un comparateur auquel est associé un compteur géré par un timer pour l'exécution de comptage synchronisé sur le passage à zéro de l'un au moins des signaux périodiques du réseau d'alimentation en courant alternatif, la périodicité du comptage étant choisie égale à la durée de l'émission d'un bit en modulation de fréquence divisé par (n), (n) étant égal au nombre de phases (ϕ1, ϕ2, ϕ3) du réseau ;
- avant chaque émission d'un message codé il est transmis, par l'émetteur vers le récepteur, un code de reconnaissance de phases.

16. Protocole selon la revendication 15, **caractérisé par le fait que** sur un réseau d'alimentation à courant alternatif à 50 Hz l'on retient un débit d'émission de 100 bauds soit une durée d'émission d'un bit égal à 10 millisecondes entraînant une périodicité de comptage égale à 10 millisecondes divisé par trois.

17. Appareillage électrique, tel que volet roulant ou dispositif de chauffage électrique, **caractérisé en ce qu'**il comporte un dispositif de transmission selon la revendication 13.

## Patentansprüche

1. Sender (1), der geeignet ist, einem Empfänger digitale Daten in Form von einem frequenzmodulierten Signal zu übertragen über ein Wechselstromversorgungsnetz (2), **dadurch gekennzeichnet, daß** er in Kombination folgendes umfaßt:
- einen an das Netz (2) angeschlossenen LC-Oszillator (3), der durch ein auf die Sendefrequenzen f1, f2 eingestelltes Sendebandpaß-Filter, einen Verstärker (5) mit einer operationellen Verstärkung (6) und einen Anpassungstransformator (7) übergeht;
- eine Frequenzsteuerschaltung (8), bestehend aus einer Reihe von Kondensatoren (C1, C2, C3, C4, C5), die geeignet sind, durch einen Mikroprozessor (9) ausgewählt zu werden, um, einerseits, die Auswahl der Sendefrequenzen f1 f2 entsprechend dem 0- oder l-Bitcode der zu übermittelnden digitalen Daten zu sichern, und andererseits, diese Sendefrequenzen f1, f2 zu regeln;
- eine Empfangsschaltung (10), die insbesondere geeignet ist, die Anwesenheit eines Signals in dem Netz (2) vor jeder Sendung festzustellen.

2. Sender nach Anspruch 1, **dadurch gekennzeichnet, daß** er eine Versorgungsschaltung (11) umfaßt, die hauptsächlich durch einen Versorgungskondensator (12) gebildet ist, der geeignet ist, eine dielektrische Isolierung zu schaffen, wobei diese Versorgungsschaltung (11) noch geeignet vorgesehen ist, die Speisungen (13, 14) mit unterschiedlichen Spannungen (T1, T2) zu sichern, wovon die eine (13) insbesondere für die Speisung der elektronischen Bestandteile, wie des Mikroprozessors (9), angepaßt ist, während die andere (14) speziell für die Speisung des Verstärkers (5) oder noch des LC-Oszillators (3) vorgesehen werden kann.

3. Sender nach Anspruch 2, **dadurch gekennzeichnet, daß** die Speisung (14) ganz besonders gebildet ist, um die Speisung des Verstärkers (5) mit einer bestimmten Spannung zu erlauben, um eine Verstärkung des Sendesignals mit konstanter Spannung zu sichern.

4. Sender nach irgendeinem der vorgehenden Ansprüche, **dadurch gekennzeichnet, daß** das Sendesignal durch die Empfangsschaltung (10) in Richtung des Mikroprozessors (9) übertragen wird, wobei es durch einen Komparator (16) übergeht, der geeignet ist, ein Sinussignal in ein Ein/Aus-Signal umzuwandeln, wobei der besagte Komparator (16) mit einem Zähler (17) verbunden ist, der in dem besagten Mikroprozessor (9) integriert ist und einem Verzögerer (18) zugeordnet ist, der übrigens durch einen Quarzoszillator (15) verwaltet wird, und zwar für die Analyse der Frequenzen f1, f2 dieses Sendesignals und ihrer Korrektur mittels der Auswahl der Kondensatoren (C1, C2, C3, C4) hinsichtlich wenigstens einer gespeicherten Bezugsfrequenz f1 oder f2 entsprechend dem 0- oder 1-Bitcode.

5. Sender nach irgendeinem der vorgehenden Ansprüche, **dadurch gekennzeichnet, daß** der Mikroprozessor 9 geeignet ist, einen Kondensator (C5) auszuwählen, der fähig ist, den Sprung zwischen einer Sendefrequenz f1, die dem Code eines 0- oder 1 -Bits entspricht, und einer anderen Sendefrequenz f2, die dem Code des anderen 1- oder 0-Bits der zu übermittelnden digitalen Daten entspricht, zu sichern.

6. Sender nach irgendeinem der vorgehenden Ansprüche, **dadurch gekennzeichnet, daß** er Mittel zum Synchronisieren (19) des Sendesignals hinsichtlich des Nullübergangs wenigstens von einem der Sinussignale des Wechselstromversorgungsnetzes (2) umfaßt, wobei diese Mittel außerdem Mittel zum Synchronisieren des Verzögerers (18) bilden, der dem Zähler (17) des Mikroprozessors (9) zugeordnet ist, bei diesem selben Nullübergang des besagten Signals in dem Netz (2).

7. Sender nach irgendeinem der Ansprüche 4 bis 6, **dadurch gekennzeichnet, daß** die Senderate so gewählt ist, daß ein Bit während einer Dauer frequenzmoduliert gesendet wird, die einer Halbperiode wenigstens eines der Sinussignale des Wechselstromversorgungsnetzes (2) entspricht, während eine Zählung durch den Zähler (17) des Mikroprozessors nach einer Periodizität durchgeführt wird, die dieser Halbperiode des besagten Sinussignals des Wechselstromversorgungsnetzes (2) höchstens gleich ist.

8. Empfänger, der geeignet ist, ein Signal digital zu entschlüsseln, das frequenzmoduliert an ein Wechselstromversorgungsnetz übertragen wurde, umfassend einen verstärkenden Empfangsbandpaß-Filter (31), der auf die Frequenzen f1, f2 des übermittelten Signals eingestellt und geeignet ist, die Störfrequenzen, insbesondere des Wechselstromversorgungsnetzes, abzuschwächen und die besagten Frequenzen f1 und f2 des übermittelten Signals zu verstärken, **dadurch gekennzeichnet, daß** er noch einen Komparator (35) umfaßt, der in einem Mikroprozessor (36) integriert und einem Zähler (37) zugeordnet ist, der durch einen Verzögerer (38) gesteuert wird, welcher durch einen Quarzoszillator (39) für die Umwandlung des empfangenen frequenzmodulierten Signals in digitale Daten verwaltet ist.

9. Empfänger nach Anspruch 8, **dadurch gekennzeichnet, daß** der Verstärkungsfilter (31) geeignet vorgesehen ist, Überspannungen zu tragen, insbesondere durch eine Reihenschaltung eines Kondensators (32) und eines Widerstandes (33), wobei dieser letztere bezweckt, den Strom zu begrenzen, wobei dieser Verstärkungsfilter (31) außerdem wenigstens aus einem ersten passiven Filter R, den parallelen Reihen L und C (35), gefolgt von einer oder mehreren Aktivfilterstufen, nämlich mit einem Invertor des Typs CMOS mit linearem Betrieb, gebildet ist.

10. Empfänger nach Anspruch 9, **dadurch gekennzeichnet, daß** der Verstärkungsfilter (31) noch durch einen zweiten passiven Filter mit parallelen L und C (41) mit starker Impedanz unter dem Einfluß eines Signals mit einer Frequenz f1 und f2 und mit geringer Impedanz kontinuierlich zwecks der Feststellung eines Signals mit einer schwacher Spannung vervollständigt wird.

11. Empfänger nach irgendeinem der Ansprüche 8 bis 10, **dadurch gekennzeichnet, daß** er Mittel zum Synchronisieren (40) des Verzögerers (38) des Mikroprozessors (36) umfaßt, der die Verwaltung des Zählers (37) sichert, und zwar hinsichtlich des Nullübergangs wenigstens von einem der Sinussignale des Wechselstromversorgungsnetzes (2) zwecks des Empfangs und des Dekodierens von einem Signal, das durch einen Sender ebenfalls synchron hinsichtlich des Nullübergangs wenigstens von einem dieser Sinussignale des besagten Netzes (2) übertragen wurde.

12. Empfänger nach irgendeinem der Ansprüche 8 bis 11, **dadurch gekennzeichnet, daß** er eine Versorgungsschaltung (42) umfaßt, die mit dem Netz (2) verbunden ist und hauptsächlich aus einer fallenden Impedanz, einem Widerstand oder einem Kondensator gebildet ist.

13. Vorrichtung zur Übertragung eines Befehls durch Trägerstrom, umfassend einen Sender (1) nach irgendeinem der Ansprüche 1 bis 8 und einen Empfänger (30) nach irgendeinem der Ansprüche 8 bis 12.

14. Anwendung einer Vorrichtung zur Übertragung eines Befehls durch Trägerstrom nach Anspruch 13 für die haustechnische Verwaltung von elektrischen Geräten, wie Heizgeräten, Schließsystemen, zum Beispiel Rolladen, oder noch elektronischen Zugangsschutzsystemen.

15. Protokoll für die Übertragung und für den Empfang durch Trägerstrom von digitalen Daten mittels eines frequenzmodulierten Signals über ein mehrphasiges Wechselstromversorgungsnetz, **dadurch gekennzeichnet, daß** :
- die Dauer der frequenzmodulierten Sendung von 1 Bit gleich wie die Dauer der Halbperiode des periodischen Sinussignals von einer der Phasen des besagten Wechselstromversorgungsnetzes ist, wobei das besagte Sendesignal außerdem beim Nullübergang des periodischen Signals einer der besagten Phasen synchronisiert ist;
- bei dem Empfang des frequenzmodulierten Signals dieses in ein Ein/Aus-Signal durch einen Komparator umgewandelt wird, dem ein Zähler zugeordnet ist, der durch einen Verzögerer verwaltet ist für die Ausführung der synchronisierten Zählung bei dem Nullübergang wenigstens von einem der periodischen Signale des Wechselstromversorgungsnetzes, wobei die Periodizität der Zählung gewählt ist, um gleich wie die Dauer der frequenzmodulierten Sendung eines Bits geteilt durch (n) zu sein, wobei (n) gleich wie die Anzahl der Phasen (ϕ1,ϕ2,ϕ3) des Netzes sei;
- vor jeder Sendung einer kodierten Mitteilung von dem Sender in Richtung des Empfängers ein Kode zur Erkennung der Phasen übermittelt wird.

16. Protokoll nach Anspruch 15, **dadurch gekennzeichnet, daß** bei einem 50 Hz-Wechselstromversorgungsnetz eine Senderate von 100 Baud erhalten wird, d.h. die Dauer der Sendung eines Bits entspricht 10 Millisekunden, eine Periodizität der Zählung bewirkend, die 10 Millisekunden geteilt durch drei entspricht.

17. Elektrische Ausstattung, wie Rolladen oder elektrische Heizungsvorrichtung, **dadurch gekennzeichnet, daß** sie eine Übertragungsvorrichtung nach Anspruch 13 umfaßt.

## Claims

1. Transmitter (1) suitable for transmitting digital data to a receiver in the form of a frequency-modulated signal on an alternating-current supply network (2), **characterised in that** it includes, in combination :
- a LC oscillator (3) connected to the network (2), through a transmission band-pass filter fixed at the transmission frequencies f1, f2, an amplifying device (5) with an operative amplifier (6) and an adapting transformer (7) ;
- a frequency-control circuit (5) comprised of a series of capacitors (C1, C2, C3, C4, C5) capable of being selected by a microprocessor (9) in order to, on the one hand, ensure the selection of the transmission frequencies f1, f2 corresponding to the 0 or 1 bit coding of the digital data to be transmitted and, on the other hand, adjust these transmission frequencies f1, f2 ;
- a receiving circuit (10), namely capable of detecting the presence of a signal on the network (2) before each transmission.

2. Transmitter according to claim 1, **characterised in that** it includes a supply circuit (11) mainly comprised of a supply capacitor (12) capable of creating a dielectric insulation, this supply circuit (11) being also designed capable of ensuring current supplies (13, 14) at different voltages (T1, T2), one of which is in particular suited for supplying current to electronic components, such as the microprocessor (9), while the other one (14) can be particularly suited for supplying current to the amplifying device (5) or also to the LC oscillator (3).

3. Transmitter according to claim 2, **characterised in that** the supply (14) is particularly defined for allowing the supply of current to the amplifier (5) at a determined voltage, with a view to ensuring a transmission-signal amplifying at a constant voltage.

4. Transmitter according to any of the preceding claims, **characterised in that** the transmission signal is conveyed through the receiving circuit (10) to the microprocessor (9), while passing through a comparator (16) capable of converting a sine signal into a go-no-go signal, said comparator (16) being connected to a meter (17) integrated into said microprocessor (9) and associated with a timer (18), which is furthermore controlled through a quartz crystal oscillator (15), this for the analysis of the frequencies f1, f2 of this transmission signal and their correction through selecting the capacitors (Cl, C2, C3, C4) with respect to at least one reference frequency f1 or 12 in memory corresponding to a 0 or 1 bit code.

5. Transmitter according to any of the preceding claims, **characterised in that** the microprocessor 9 is capable of selecting a capacitor (C5) capable of ensuring the jump between a transmission frequency f1 corresponding to the code of a 0 or 1 bit and another transmission frequency f2 corresponding to the code of the other 1 or 0 bit of the digital data to be transmitted.

6. Transmitter according to any of the preceding claims, **characterised in that** it includes means for synchronising (19) the transmission signal with respect to the zero crossing of at least one of the sine signals of the alternating-current supply network (2), these means forming, in addition, means for synchronising the timer (18) associated with the meter (17) of the microprocessor (9) at this same zero crossing of said signal in the network (2).

7. Transmitter according to any of claims 4 to 6, **characterised in that** the transmission rate is selected so that one bit is transmitted frequency-modulated over a time period corresponding to a half-cycle of at least one of the sine signals of the alternating-current supply network (2), while a counting is performed by the meter (17) of the microprocessor according to a periodicity at most equal to this half-cycle of said sine signal of the alternating-current supply network (2).

8. Receiver suitable for digitally decrypting a signal transmitted frequency-modulated on an alternating-current supply network, including an amplifying receiving band-pass filter (31) fixed at the frequencies f1, f2 of the transmitted signal and capable of attenuating the interference frequencies, namely of the alternating-current supply network, and of amplifying said frequencies f1 and f2 of the transmitted signal, **characterised in that** it also includes a comparator (35) integrated into a microprocessor (36) and connected to a meter (37) controlled by a timer (38) controlled by a quartz crystal oscillator (39) for transforming the received frequency-modulated signal into digital data.

9. Receiver according to claim 8, **characterised in that** the amplifying filter (31) is designed capable of resisting to over-voltages, in particular through a series arrangement of a capacitor (32) and a resistor (33), the latter being aimed at limiting the current, this amplifying filter (31) being, furthermore, comprised of at least a first passive filter R, parallel series L and C (35), followed by one or several stages of active filters, namely with a CMOS-type, lineally-operating inverter.

10. Receiver according to claim 9, **characterised in that** the amplifying filter (31) is also completed with a second passive filter with parallel L and C (41) and strong impedance under the influence of a signal with frequency f1 and f2 and with low impedance continuously, with a view to detecting a low-voltage signal.

11. Receiver according to any of claims 8 to 10, **characterised in that** it includes means for synchronising (40) the timer (38) of the microprocessor (36) ensuring the control of the meter (37), this with respect to the zero crossing of at least one of the sine signals of the alternating-current supply network (2), with a view to receiving and decoding a signal transmitted by a transmitter, also synchronously with respect to the zero crossing of at least one of these sine signals of said network (2).

12. Receiver according to any of claims 8 to 11, **characterised in that** it includes a supply circuit (42) connected to the network (2) and mainly comprised of a dropping impedance, a resistor or a capacitor.

13. Device for transmitting an order by carrier current, including a transmitter (1) according to any of claims I to 8 and a receiver (30) according to any of claims 8 to 12.

14. Application of a device for transmitting an order by carrier current according to claim 13 to the household control of electric appliances, such as heating apparatus, closing systems, for example, roller shutters, or also electronic access-protection systems.

15. Protocol for transmitting and receiving digital data by carrier current through a frequency-modulated signal on a poly-phase alternating-current supply network, **characterised in that**:
- the frequency-modulated transmission time for 1 bit is equal to the time of one half-cycle of the periodic sine signal of one of the phases of said alternating-current supply network, said transmission signal being, in addition, synchronised with the zero crossing of the periodic signal of one of said phases ;
- when receiving the frequency-modulated signal, the latter is converted into a go-no-go signal through a comparator to which is associated a meter controlled by a timer for performing a counting synchronised with the zero crossing of at least one of the periodic signals of the alternating-current supply network, the periodicity of counting being chosen equal to the duration of the frequency-modulated transmission of one bit divided by (n), (n) being equal to the number of phases (ϕ1, ϕ2, ϕ3) of the network;
- before each transmission of a coded message, a phase-recognising code is transmitted by the transmitter to the receiver.

16. Protocol according to claim 15, **characterised in that** on a 50 Hz alternating-current supply network is maintained a 100 baud transmission rate, i.e. a transmission time for one bit equal to 10 milliseconds, resulting into a counting periodicity equal to 10 milliseconds divided by three.

17. Electric apparatus, such as a roller shutter or an electric heating apparatus, **characterised in that** it includes a transmission device according to claim 13.
